# EUROPEAN PATENT SPECIFICATION

(11) **EP 4 447 763 B1**
(45) Date of publication and mention of the grant of the patent: **08.04.2026**
(21) Application number: 22840818.3
(22) Date of filing: 14.12.2022
(51) Int. Cl.: A47J 31/36

(54) **MACHINE FOR PREPARING AND EXTRACTING A HOT BEVERAGE**
MASCHINE ZUR ZUBEREITUNG UND EXTRAKTION EINES HEISSGETRÄNKS
MACHINE DE PRÉPARATION ET D'EXTRACTION DE BOISSON CHAUDE

(30) Priority: 17.12.2021 IT 202100031655
(43) Date of publication of application: 23.10.2024
(73) Proprietor: Gise Caffé S.r.l., 40041 Gaggio Montano (IT)
(72) Inventor: ACCURSI, Giovanni, 40046 Alto Reno Terme (Bologna) (IT)
(74) Representative: Bianciardi, Ezio
(86) International application number: PCT/IB2022/062202
(87) International publication number: WO 2023/111887

(56) References cited:
- WO-A1-2008/014830
- KR-A- 20210 059 509
- US-A1- 2009 199 518
- US-A1- 2013 239 820
- US-B2- 7 946 217

## Description

### Technical field

This invention relates to a machine for preparing and extracting a hot beverage.

### Background art

The machine according to the invention is of the type using single capsules, preferably of the single-dose type, from which the hot beverage is extracted (such as coffee, tea, milk, camomile and similar beverages) by extracting the product with pressurised hot fluid.

The capsules used for this type of machine basically comprise a capsule body forming a chamber having a bottom and an opening of the capsule body delimited by an annular collar protruding transversally with respect to the body.

A dose of extraction product is housed in the chamber.

The opening of the capsule is sealed by a piece of film adherent to the annular collar.

The prior art machines using these capsules basically comprise:
- a load-bearing frame having an inlet opening for the capsule;
- a first fixed extraction unit positioned in the load-bearing frame and comprising a housing for the capsule and means for perforating and passage of the mixture, to obtain the extraction of the beverage, positioned on the bottom of the housing;
- a second movable extraction unit, positioned inside the frame, and movable inside the frame along a linear trajectory, in both directions, between a first non-operating end position away from the first fixed extraction unit (wherein the second movable extraction unit is positioned close to the inlet opening), and a second operating end position wherein the second movable extraction unit is moved towards the first fixed extraction unit in such a way as to move the capsule from an inlet position in the frame to a housing position in the first fixed unit for extracting the beverage by feeding a pressurised hot fluid.

Means for supporting the capsule are interposed between the movable extraction unit and the frame.

Usually, these supporting means may comprise a pair of protruding arms, positioned on both sides of the movable extraction unit, configured to retain the capsule entering (by falling) from the opening present on the frame. The pair of arms is configured to move along the frame synchronised with the movable extraction unit.

These arms can move between an operating position, with the ends of the arms positioned at a reciprocal reduced distance, for retaining the capsule (with the extraction unit movable in the first non-operating position), to a non-operating position, wherein the ends of the arms are at a mutual distance greater than the previous distance so as to free the capsule at the housing of the capsule in the fixed dispensing extraction unit (with the movable extraction unit in the second operating position).

The movable extraction unit has a head provided with perforating elements which are able to perforate, according to a first solution, the sheet of film (if the capsule is inserted in the frame with the bottom facing towards the fixed extraction unit) or, according to a second solution, the perforating elements perforate the bottom of the capsule (if the capsule is inserted in the frame in the opposite direction to the previous one).

The head of the movable extraction unit is provided with ducts for the passage of the pressurised hot fluid to be introduced into the capsule after the capsule has been perforated.

The extraction of the beverage occurs by the combination given by the increase in the pressure inside the capsule supplied by the fluid entering and by the presence of the perforating means positioned on the bottom of the housing of the first fixed extraction unit which allow an opening in the capsule to be obtained for the passage of the beverage obtained from the product/fluid mixture towards the dispensing conduits of the extracted beverage made in the first fixed extraction unit.

The perforating means positioned on the bottom of the housing, which are of particular interest in this invention, may comprise, according to a prior art solution: a perforating element positioned close to the bottom of the housing and movable, by suitable movement means, between a withdrawn non-operating position, below the bottom of the housing, and an advanced operating position, protruding from the bottom of the housing, in such a way as to perforate the bottom of the capsule inserted in the housing.

After perforation, the perforating element returns to the withdrawn non-operating position.

At this point, the increase in the pressure inside the capsule is such that the bottom deforms downwards and increases the size of the incision on the bottom. At the same time, the pressurised fluid mixes with the product forming the product to be dispensed which starts to come out of the incision on the bottom and flow into one or more ducts feeding the beverage dispensing nozzle.

One of these solutions of the machine and perforating means is described in patent document WO 2008/014830.

However, this type of structure of the perforating means has drawbacks.

The perforating means needs movable elements in order to be able to make the incision and, therefore, the central part of the bottom zone of the housing cannot be used to correctly make the ducts for feeding the beverage, which must be obtained peripherally with respect to the central opening with risks of a partial loss of quality and quantity of product.

Moreover, the early perforation of the bottom of the capsule may result in incorrect escape of product which has not yet been mixed perfectly with the pressurised fluid.

### Aim of the invention

The aim of this invention is to provide a machine for preparing and extracting a hot beverage that overcomes the above-mentioned drawbacks of the prior art.

In particular, the aim of the invention is to provide a machine for preparing and extracting a hot beverage which is able to correctly guide the escape of the beverage from the capsule base.

A further aim of the invention is to provide a machine for preparing and extracting a hot beverage with an extremely compact perforating unit so as to reduce the overall dimensions of the machine.

Said aims are fully achieved by the machine for preparing and extracting a hot beverage according to the invention as characterised in the appended claims.

### Brief description of the drawings

The main features of the invention will become more apparent from the following detailed description of a preferred, non-limiting embodiment, illustrated purely by way of example in the accompanying drawings, in which:
- Figure 1 is a perspective view, with some parts cut away to better illustrate others, of a machine for preparing and extracting a hot beverage according to the invention;
- Figure 2 is a top plan view of the machine of Figure 1;
- Figure 3 is a side view, with some parts cut away and other parts in cross section, of the a part of the machine of Figure 1;
- Figures 4, 5 and 6 are all plan views from above, with some parts cut away and others in cross section of a part of the machine of the preceding figures, in particular a fixed extraction unit with capsule perforating means, in three different operating configurations for extracting the beverage;
- Figures 7, 8 and 9 are, respectively, a side view, a top plan view and a perspective view of perforating means of the machine of the preceding drawings.

### Detailed description of preferred embodiments of the invention

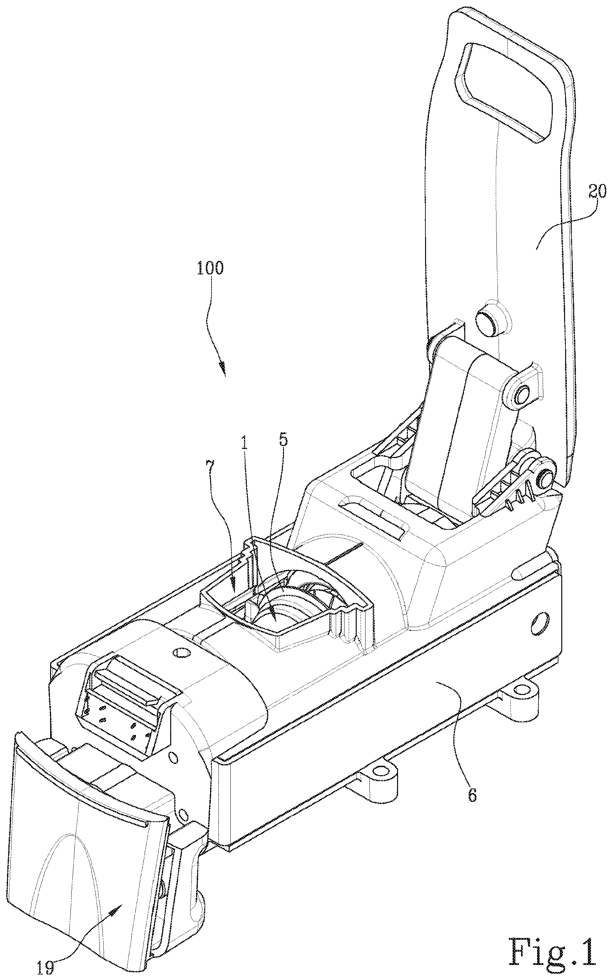

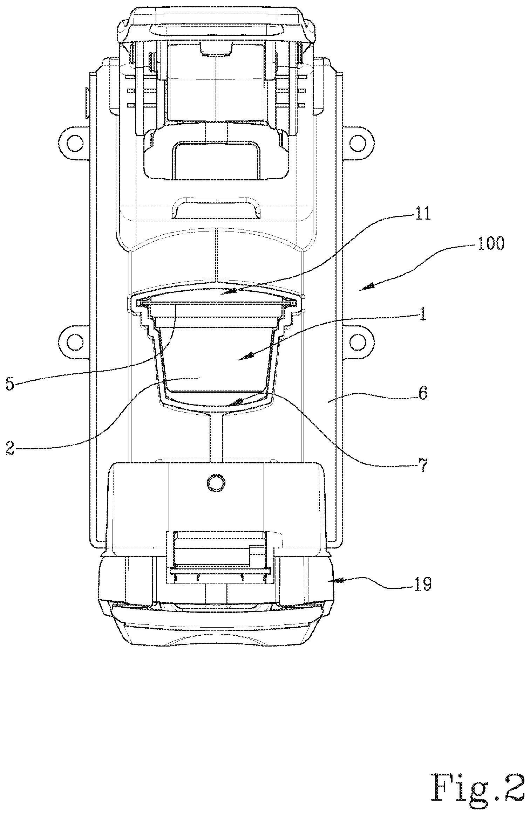

With reference to the accompanying drawings, in particular Figures 1 and 2, the machine according to the invention, labelled 100 in its entirety, is used with single capsules, preferably of the single-dose type, from which the hot beverage is extracted (such as coffee, tea, milk, camomile and similar beverages) by extracting the product with pressurised hot fluid.

The capsule 1 which can be used in the machine 100 basically comprises a capsule body 2, forming a chamber, having a first closed wall 3 or bottom and a second open wall 4 or opening delimited by an annular collar 5 protruding transversely with respect to the capsule body 2.

A sheet for sealing the chamber (not illustrated) is positioned on the second open part 4 and the collar 5.

The chamber houses at least one dose of product.

Figures 1 and 2 illustrate a part of the machine for preparing and extracting a hot beverage from the capsule 1, that is to say, the operating parts of relevance for the invention.

The machine 100 comprises a load-bearing frame 6 having an inlet opening 7 for the capsule 1.

Moreover, the machine 100 comprises a first fixed extraction unit 8 associated with the frame 6 and comprising a matching housing 9 for the capsule 1 and means 10 for perforating and passage of the mixture, to then obtain the extraction of the beverage.

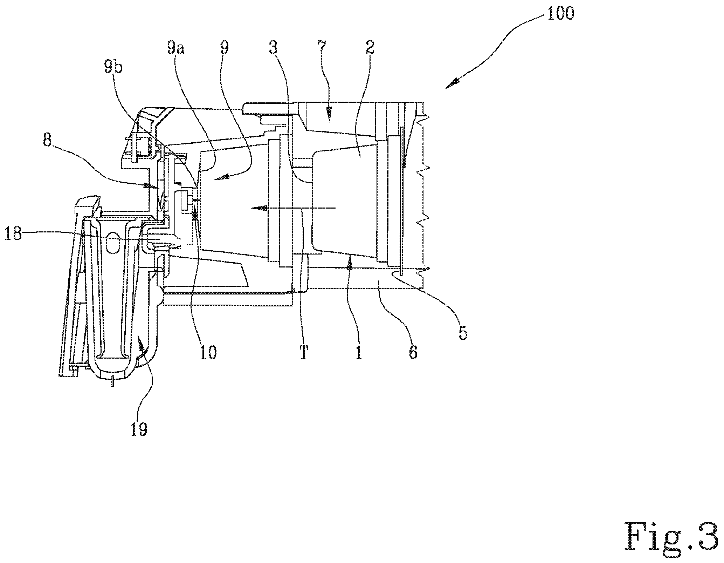

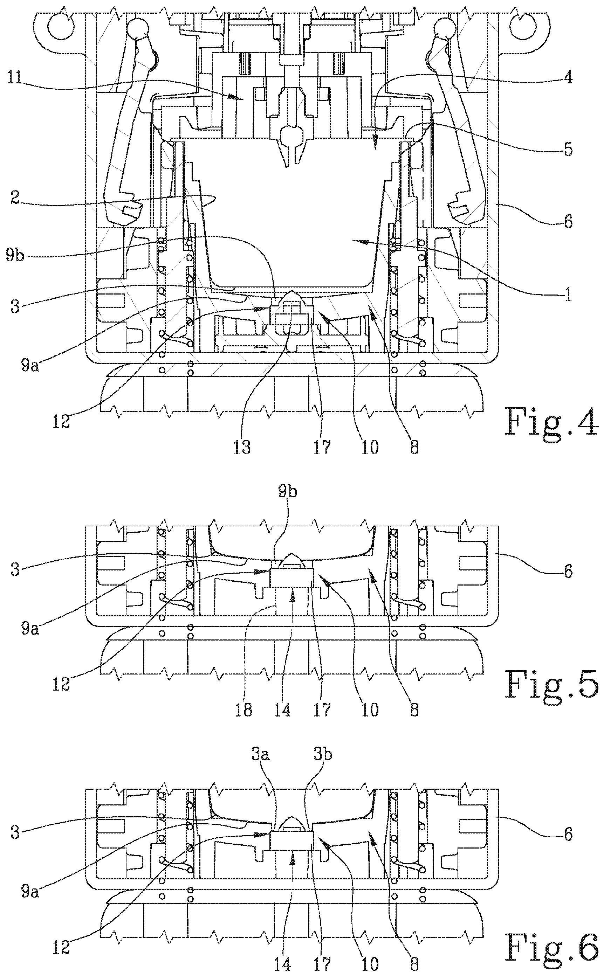

The machine 100 also comprises a second movable extraction unit 11, positioned inside the frame 6, and movable inside the frame 6 along a linear trajectory T, in both directions, between
- a first non-operating end position away from the first fixed extraction unit 8 (Figures 2 and 3), wherein the second movable extraction unit 11 can receive the capsule 2 through the inlet opening 7, and
- a second operating end position (Figures 4-6) wherein the second movable extraction unit 11 is moved towards the first fixed extraction unit 8 in such a way as to move the capsule 1 from an inlet position to a position for insertion in the housing 9 of the first fixed unit 8 for extracting the beverage by feeding a pressurised hot fluid inside the capsule 1.

According to Figures 4 to 6 and 7 to 9, the means 10 for perforating and passage of the mixture comprise a perforating punch 12, positioned fixed at a bottom 9a of the housing 9, and partly protruding from the bottom 9a. Again as illustrated, the punch 12 comprises a first apical portion 12a configured, in use, to intercept and perforate the first wall 3 of the capsule 1 upon a deformation of the first wall 3 of the capsule 1, by effect of the pressurised fluid, towards the bottom 9a of the housing 9.

The punch 12 has a second base portion 12b having a bridge-shaped cross-section defining an opening 13 passing towards a channel 14 or chamber, positioned below the punch 12, configured for the controlled falling of the liquid mixture coming out from the opening of the wall 3 of the capsule 1 whilst the punch 12 is kept, that is, inserted, inside the capsule 1.

In other words, the perforating means are positioned in a fixed position and use the deformation of the wall of the capsule for cutting the wall of the capsule. Moreover, the same means are configured to remain inside the capsule during the fluid / product mixing and, at the same time, are configured to allow the controlled escape of the mixture through the opening of the punch and the underlying duct.

As illustrated, the channel 14 has two semi-circular portions defined by the overlying punch 12 and configured to contain two lips 3a, 3b of the first wall 3 of the capsule 1, defined by the incision of the punch 12, generated upon the deformation of the capsule 1 by effect of the pressurised fluid, and in such a way as to define a single controlled outlet point of the liquid mixture. (see Figure 6).

More specifically, the punch 12 is partly housed in a cylindrical cavity 9b made in the bottom 9a of the housing defining the upper part of the channel 14 or chamber.

In short, the cylindrical cavity 9b makes it possible to "contain" and guide the burring of the incision made by the punch 12.

As illustrated, the bottom 9a of the housing 9 of the first fixed extraction unit 8 has a profile which is partly rounded and configured to allow a complementary coupling of the wall 3 of the capsule 1 perforated by the punch 12 upon its deformation under the effect of the pressure of the fluid entering.

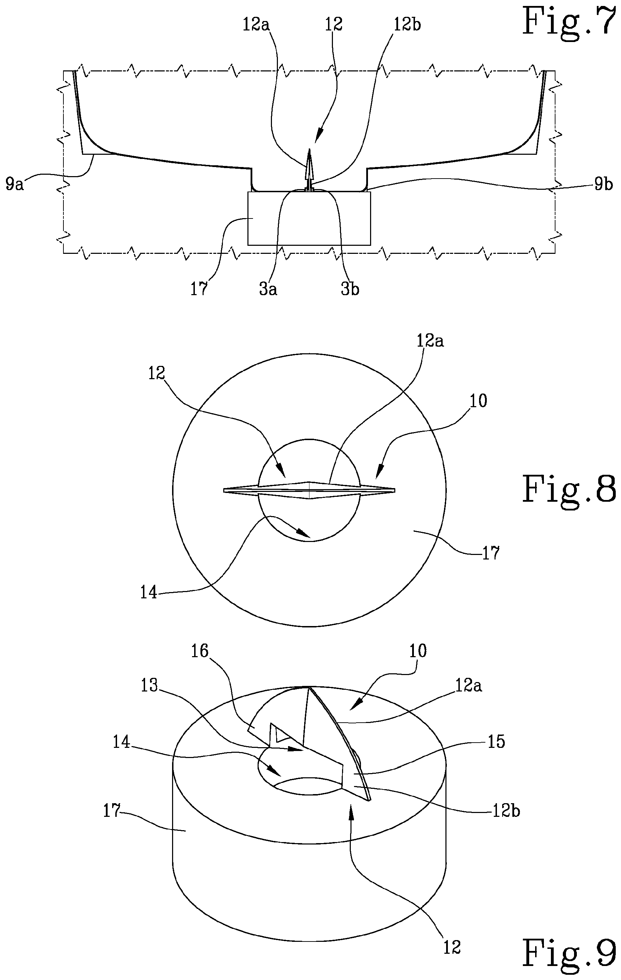

As illustrated in Figures 7 to 9, the punch 12 has a first apical portion 12a having a triangular cross-section with a free vertex oriented away from the bottom 9a of the housing 9 of the first fixed extraction unit 8.

Preferably, but not necessarily, the punch 12 has a triangular shape with rounded outer sides (so as to define spreader elements).

In light of this, the second base portion 12b of the punch 12 has a cross section less than the cross section of the first apical portion 12a, and comprises two end arms 15 and 16 for fixing to the first fixed extraction unit 8.

The opening 13 for the passage of the liquid mixture is formed between the two arms.

It should be noted that the punch 12 is associated with and protruding from a supporting base 17 inserted in the first fixed extraction unit 8.

On the supporting base 17 there is the channel 14 or chamber connected to a conduit 18 for the passage of the liquid mixture towards a dispensing head 19.

In light of this, the supporting base 17 has the open channel 14 with a circular cross-section above which the punch 12 is positioned along a diametric directrix passing through the centre of the circular cross-section of the channel 14 and covering only a part of the channel 14.

As mentioned above, the channel 14, having the two semi-circular portions defined by the overlying punch 12, is configured to contain the two lips 3a, 3b of the first wall 3 of the capsule 1, formed by the incision of the punch 12 and by the deformation of the capsule 1 by effect of the pressurised fluid.

These two lips 3a, 3b, widening and inserting in the cavity 9b, tend to therefore also reach the semi-circular openings of the supporting base 17, due to the effect of the pressure of the fluid, in such a way as to control the outlet flow also thanks to the second open portion 12b of the punch 12 which prevents possible blocking of the flow of the mixture.

The invention also provides a method for preparing and extracting a hot beverage from the capsule 1 comprising the capsule body 2 forming a chamber delimited by a first closed wall 3 and a second open wall 4 on which is positioned, for closing, a sheet for sealing the chamber; a dose of product being housed inside the chamber.

The method comprises the following steps:
- inserting the capsule 1 in an inlet opening 7 of the machine 100 and at the second movable extraction unit 11 positioned in a first non-operating end position;
- moving the second movable unit 11 with the capsule 1, along a linear trajectory T, towards a first fixed extraction unit 8 having a matching housing 9 for the capsule 1 and means 10 for perforating and passage of the mixture, to obtain the extraction of the beverage;
- locking the capsule 1 inside the housing 9 without contact between the first closed wall 3 of the capsule 1 and the perforating means 10;
- introducing a pressurised hot fluid through the second wall 4 by perforating its sealing sheet;
- deforming the first wall 3 of the capsule 1 by effect of the pressure of the hot fluid towards a bottom 9a of the housing 9;
- perforating the first deformed wall 3 through a first apical portion 12a of a perforating punch 12, positioned fixed at the bottom 9a of the housing 9,
- outfeed of the liquid mixture at the outlet from an opening of the first wall 3 of the capsule 1 perforated whilst the apical portion 12a of the punch 12 is inserted inside the capsule 1;
- controlled falling of the liquid mixture through a second base portion 12b of the punch 12 having a bridge section defining an opening 13 passing towards a channel 14 or chamber, positioned below the punch 12 to obtain the dispensing of the hot beverage.

It should be noted that at the end of the step of dispensing the hot beverage, that is to say, at the end of the introduction of hot fluid under pressure in the capsule 1, only the apical portion 12a of the punch 12 remains inserted inside the capsule 1, blocking the escape of the remaining liquid inside the capsule 1 until extraction of the capsule 1.

The blocking of the escape of the fluid is obtained thanks to the fact that the first (bottom) wall 3 of the capsule 1, upon completion of the flow of the pressurised fluid, tends to return to a non-deformed position moving away from the second portion 12b of the punch 12 remaining engaged only with the first apical portion 12a which defines a cap for closing the passage of the liquid.

The preset aims are achieved with a machine structured in this way thanks to a perforating unit structured in such a way as to open the capsule only in the presence of the pressurised liquid and thanks to the deformation of the capsule.

The particular geometry of the perforator allows:
- controlling in an optimum fashion the flow of the mixture, already formed inside the capsule, and
- blocking any dripping of the remains of the mixture of the product once the dispensing has been completed, thanks to the fact that the apical part of the perforator remains inside the capsule until it leaves the housing.

## Claims

1. A machine for preparing and extracting a hot beverage from a capsule (1) comprising a capsule body (2) forming a chamber delimited by a first closed wall (3) and a second open wall (4) on which is positioned, for closing, a sheet for sealing the chamber; a dose of product being housed inside said chamber; the machine (100) comprising:
- a load-bearing frame (6) having an inlet opening (7) for the capsule (1);
- a first fixed extraction unit (8) associated with the frame (6) and comprising a matching housing (9) for the capsule (1) and means (10) for perforating the capsule (1) and passage of the mixture, to obtain the extraction of the beverage;
- a second movable extraction unit (11), positioned inside the frame (6), and movable inside the frame (6) along a linear trajectory (T), in both directions, between a first non-operating end position away from the first fixed extraction unit (8), wherein the second movable extraction unit (11) can receive the capsule (2) through the inlet opening (7), and a second operating end position wherein the second movable extraction unit (11) is moved towards the first fixed extraction unit (8) in such a way as to move the capsule (1) from an inlet position to a position for insertion in the housing (9) of the first fixed unit (8) for extracting the liquid mixture by feeding a pressurised hot fluid inside the capsule (1);
**characterised in that** the means (10) for perforating and passage of the mixture comprise a perforating punch (12), positioned fixed at a bottom (9a) of the housing (9), and partly protruding from the bottom (9a); the punch (12) comprising:
- a first apical portion (12a) configured, in use, to intercept and perforate the first wall (3) of the capsule (1) upon a deformation of the first wall (3) of the capsule (1), by effect of the pressurised fluid, towards the bottom (9a) of the housing (9);
- a second base portion (12b) having a bridge-shaped cross-section defining an opening (13) passing towards a channel (14) or chamber, positioned below the punch (12), configured for the controlled falling of the liquid mixture coming out from the opening of the first wall (3) of the capsule (1) whilst the punch (12) is kept, that is, inserted, inside the capsule (1),
being **characterized in that** the channel (14) has two semi-circular portions defined by the overlying punch (12) and configured to contain two lips (3a, 3b) of the first closed wall (3) of the capsule (1), defined by the incision of the punch (12), generated upon the deformation of the first closed wall (3) by effect of the pressurised fluid, and in such a way as to define a single controlled outlet point of the liquid mixture.

2. The machine according to claim 1, wherein the bottom (9a) of the housing (9) of the first fixed extraction unit (8) has a profile which is partly rounded and configured to allow a complementary coupling of the first wall (3) of the capsule (1) perforated by the punch (12) upon its deformation under the effect of the pressure of the fluid entering.

3. The machine according to any one of the preceding claims, wherein the punch (12) has a first apical portion (12a) having a triangular cross-section with a free vertex oriented away from the bottom (9a) of the housing (9) of the first fixed extraction unit (8).

4. The machine according to any one of the preceding claims, wherein the punch (12) has a triangular shape with rounded outer sides; the second base portion (12b) of the punch (12) having a smaller cross section than the cross section of the first apical portion (12a), and comprises two end arms (15, 16) fixing to the first fixed extraction unit (8) inside of which is defined the opening (13) for the passage of the liquid mixture.

5. The machine according to any one of the preceding claims, wherein the punch (12) is associated with and protruding from a supporting base (17) inserted in the first fixed extraction unit (8); on the supporting base (17) there being the channel (14) or chamber connected to a conduit (18) for passage of the liquid mixture towards a dispensing head (19).

6. The machine according to claim 5, wherein the supporting base (17) has the open channel (14) with a circular cross-section above which the punch (12) is positioned along a diametric directrix passing through the centre of the circular cross-section of the channel (14) and covering only a part of the channel (14).

7. The machine according to any one of the preceding claims, wherein the punch (12) is partly housed in a cylindrical cavity (9b) made in the bottom (9a) of the housing defining the upper part of the channel (14) or chamber.

8. A method for preparing and extracting a hot beverage from a capsule (1) comprising a capsule body (2) forming a chamber delimited by a first closed wall (3) and a second open wall (4) on which is positioned, for closing, a sheet for sealing the chamber; a dose of product being housed inside said chamber;
a method comprising the steps of:
- inserting the capsule (1) in an inlet opening (7) of a machine (100) for preparing and extracting the hot beverage from the capsule (1) and at a second movable extraction unit (11) positioned in a first non-operating end position;
- moving the second movable unit (11) with the capsule (1), along a linear trajectory (T), towards a first fixed extraction unit (8) having a matching housing (9) for the capsule (1) and means (10) for perforating and passage of the mixture, to obtain the extraction of the beverage;
- locking the capsule (1) inside the housing (9) without contact between the first closed wall (3) of the capsule (1) and the perforating means (10);
- introducing a pressurised hot fluid through the second wall (4) by perforating its sealing sheet;
- deforming the first wall (3) of the capsule (1) by effect of the pressure of the hot fluid towards a bottom (9a) of the housing (9);
- perforating the first deformed wall (3) through a first apical portion (12a) of a perforating punch (12), positioned fixed at the bottom (9a) of the housing (9);
- outfeed of the liquid mixture at the outlet from an opening of the first wall (3) of the capsule (1) perforated whilst the apical portion (12a) of the punch (12) is inserted inside the capsule (1);
- controlled falling of the liquid mixture through a second base portion (12b) of the punch (12) having a bridge section defining an opening (13) passing towards a channel (14) or chamber, positioned below the punch (12) to obtain the dispensing of the hot beverage,
the method being **characterized in that** at the end of the step of dispensing the hot beverage, that is to say, at the end of the introduction of hot fluid under pressure in the capsule (1), only the apical portion (12a) of the punch (12) remains inserted inside the capsule (1) until the extraction of the capsule (1), blocking the escape of the remaining liquid inside the capsule (1).

## Patentansprüche

1. Maschine zur Zubereitung und Extraktion eines Heißgetränks aus einer Kapsel (1), umfassend einen Kapselkörper (2), der eine Kammer bildet, die durch eine erste geschlossene Wand (3) und eine zweite offene Wand (4) begrenzt ist, auf der zum Verschließen eine Folie zum Versiegeln der Kammer positioniert ist, wobei eine Produktdosis innerhalb der Kammer untergebracht ist, wobei die Maschine (100) Folgendes umfasst:
- einen lasttragenden Rahmen (6), aufweisend eine Einlassöffnung (7) für die Kapsel (1);
- eine erste fixe Extraktionseinheit (8), die mit dem Rahmen (6) assoziiert ist und eine passende Einhausung (9) für die Kapsel (1) sowie Mittel (10) zum Perforieren der Kapsel (1) und dem Durchgang der Mischung umfasst, um die Extraktion des Getränks zu erhalten;
- eine zweite bewegbare Extraktionseinheit (11), die innerhalb des Rahmens (6) positioniert und innerhalb des Rahmens (6) entlang einer linearen Bahn (T) in beide Richtungen zwischen einer ersten Nichtbetriebsendposition entfernt von der ersten fixen Extraktionseinheit (8), in der die zweite bewegbare Extraktionseinheit (11) die Kapsel (2) durch die Einlassöffnung (7) aufnehmen kann, und einer zweiten Betriebsendposition, in der die zweite bewegbare Extraktionseinheit (11) hinführend zu der ersten fixen Extraktionseinheit (8) derart bewegt wird, dass die Kapsel (1) von einer Einlassposition zu einer Position zum Einfügen in die Einhausung (9) der ersten fixen Einheit (8) zum Extrahieren der flüssigen Mischung durch Zuführen eines mit Druck beaufschlagten heißen Fluids in die Kapsel (1) bewegt wird,
**dadurch gekennzeichnet, dass** die Mittel (10) zum Perforieren und Durchgang der Mischung einen Perforationsstempel (12) umfassen, der fix an einer Unterseite (9a) der Einhausung (9) positioniert ist und teilweise von der Unterseite (9a) hervorsteht, wobei der Stempel (12) Folgendes umfasst:
- einen ersten Abschnitt an der Spitze (12a), der bei Gebrauch ausgelegt ist, um die erste Wand (3) der Kapsel (1) bei einer Verformung der ersten Wand (3) der Kapsel (1) durch die Wirkung des mit Druck beaufschlagten Fluids in Richtung der Unterseite (9a) der Einhausung (9) abzufangen und zu perforieren;
- einen zweiten Abschnitt an der Basis (12b), aufweisend einen brückenförmigen Querschnitt, definierend eine Öffnung (13), die hinführend zu einem Kanal (14) oder einer Kammer führt, positioniert unterhalb des Stempels (12), ausgelegt für das kontrollierte Fallen der aus der Öffnung der ersten Wand (3) der Kapsel (1) herausströmenden Mischung, während der Stempel (12) innerhalb der Kapsel (1) gehalten wird, das heißt eingefügt ist,
**dadurch gekennzeichnet, dass** der Kanal (14) zwei halbkreisförmige Abschnitte aufweist, die durch den darüberliegenden Stempel (12) definiert und ausgelegt sind, um zwei Lippen (3a, 3b) der ersten geschlossenen Wand (3) der Kapsel (1) zu enthalten, definiert durch den Einschnitt des Stempels (12), erzeugt bei der Verformung der ersten geschlossenen Wand (3) durch die Wirkung des mit Druck beaufschlagten Fluids, und sodass ein einzelner kontrollierter Auslasspunkt der flüssigen Mischung definiert wird.

2. Maschine nach Anspruch 1, wobei die Unterseite (9a) der Einhausung (9) der ersten fixen Extraktionseinheit (8) ein Profil aufweist, das teilweise abgerundet und ausgelegt ist, um ein komplementäres Kuppeln der ersten Wand (3) der Kapsel (1), die bei ihrer Verformung unter der Wirkung des Drucks des einströmenden Fluids durch den Stempel (12) perforiert wird, zu erlauben.

3. Maschine nach einem der vorhergehenden Ansprüche, wobei der Stempel (12) einen ersten Abschnitt an der Spitze (12a) aufweist, der einen dreieckigen Querschnitt mit einem von der Unterseite (9a) der Einhausung (9) der ersten fixen Extraktionseinheit (8) abgewandten freien Scheitel aufweist.

4. Maschine nach einem der vorhergehenden Ansprüche, wobei der Stempel (12) eine dreieckige Form mit abgerundeten Außenseiten aufweist, der zweite Abschnitt an der Basis (12b) des Stempels (12) einen kleineren Querschnitt als der Querschnitt des ersten Abschnitts an der Spitze (12a) aufweist und zwei Endarme (15, 16) umfasst, die an der ersten fixen Extraktionseinheit (8), innerhalb derer die Öffnung (13) für den Durchgang der flüssigen Mischung definiert ist, fixiert sind.

5. Maschine nach einem der vorhergehenden Ansprüche, wobei der Stempel (12) mit einer Stützbasis (17), die in die erste fixe Extraktionseinheit (8) eingefügt ist, assoziiert ist und von dieser hervorsteht, wobei sich auf der Stützbasis (17) der Kanal (14) oder die Kammer, verbunden mit einer Leitung (18) für den Durchgang der flüssigen Mischung in Richtung eines Abgabekopfs (19), befindet.

6. Maschine nach Anspruch 5, wobei die Stützbasis (17) den offenen Kanal (14) mit einem kreisförmigen Querschnitt aufweist, über dem der Stempel (12) entlang einer diametralen Bezugslinie, die durch den Mittelpunkt des kreisförmigen Querschnitts des Kanals (14) führt und nur einen Teil des Kanals (14) bedeckt, positioniert ist.

7. Maschine nach einem der vorhergehenden Ansprüche, wobei der Stempel (12) teilweise in einem in der Unterseite (9a) der Einhausung ausgebildeten und den oberen Teil des Kanals (14) oder der Kammer definierenden zylindrischen Hohlraum (9b) untergebracht ist.

8. Verfahren zur Zubereitung und Extraktion eines Heißgetränks aus einer Kapsel (1), umfassend einen Kapselkörper (2), der eine Kammer bildet, die durch eine erste geschlossene Wand (3) und eine zweite offene Wand (4) begrenzt ist, auf der zum Verschließen eine Folie zum Versiegeln der Kammer positioniert ist, wobei eine Produktdosis innerhalb der Kammer untergebracht ist, wobei das Verfahren die folgenden Schritte umfasst:
- Einfügen der Kapsel (1) in eine Einlassöffnung (7) einer Maschine (100) zur Zubereitung und Extraktion des Heißgetränks aus der Kapsel (1) und an einer zweiten bewegbaren Extraktionseinheit (11), die in einer ersten Nichtbetriebsendposition positioniert ist;
- Bewegen der zweiten bewegbaren Einheit (11) mit der Kapsel (1) entlang einer linearen Bahn (T) hinführend zu einer ersten fixen Extraktionseinheit (8), aufweisend eine passende Einhausung (9) für die Kapsel (1) und Mittel (10) zum Perforieren und Durchgang der Mischung, um die Extraktion des Getränks zu erhalten;
- Verriegeln der Kapsel (1) innerhalb der Einhausung (9) ohne Kontakt zwischen der ersten geschlossenen Wand (3) der Kapsel (1) und den Perforationsmitteln (10);
- Einführen eines mit Druck beaufschlagten heißen Fluids durch die zweite Wand (4), indem deren Versiegelungsfolie perforiert wird;
- Verformen der ersten Wand (3) der Kapsel (1) durch die Wirkung des Drucks des heißen Fluids in Richtung einer Unterseite (9a) der Einhausung (9);
- Perforieren der ersten verformten Wand (3) durch einen ersten Abschnitt an der Spitze (12a) eines Perforationsstempels (12), der fix an der Unterseite (9a) der Einhausung (9) positioniert ist;
- Ausbringen der flüssigen Mischung an dem Auslass aus einer Öffnung der ersten Wand (3) der Kapsel (1), die perforiert wird, während der Abschnitt an der Spitze (12a) des Stempels (12) in die Kapsel (1) eingefügt ist;
- kontrolliertes Fallen der flüssigen Mischung durch einen zweiten Abschnitt an der Basis (12b) des Stempels (12), aufweisend eine Brückensektion, definierend eine Öffnung (13), führend in Richtung eines Kanals (14) oder einer Kammer, positioniert unterhalb des Stempels (12), um das Abgeben des Heißgetränks zu erhalten,
wobei das Verfahren **dadurch gekennzeichnet ist, dass** am Ende des Schritts des Abgebens des Heißgetränks, das heißt am Ende der Einführung des heißen Fluids unter Druck in die Kapsel (1), nur der Abschnitt an der Spitze (12a) des Stempels (12) in die Kapsel (1) bis zur Extraktion der Kapsel (1) eingefügt bleibt und das Entweichen der in der Kapsel (1) verbleibenden Flüssigkeit blockiert.

## Revendications

1. Machine de préparation et d'extraction de boisson chaude à partir d'une capsule (1) comprenant un corps de capsule (2) formant une chambre délimitée par une première paroi fermée (3) et une seconde paroi ouverte (4) sur laquelle est positionnée, pour la fermeture, une feuille pour sceller la chambre ; une dose de produit étant logée à l'intérieur de ladite chambre ; la machine (100) comprenant :
- un châssis porteur (6) ayant une ouverture d'entrée (7) pour la capsule (1) ;
- une première unité d'extraction fixe (8) associée au châssis (6) et comprenant un logement correspondant (9) pour la capsule (1) et des moyens (10) de perforation de la capsule (1) et de passage du mélange, pour obtenir l'extraction de la boisson ;
- une seconde unité d'extraction mobile (11), positionnée à l'intérieur du châssis (6), et mobile à l'intérieur du châssis (6) le long d'une trajectoire linéaire (T), dans les deux directions, entre une première position d'extrémité de non-fonctionnement éloignée de la première unité d'extraction fixe (8), dans laquelle la seconde unité d'extraction mobile (11) peut recevoir la capsule (2) à travers l'ouverture d'entrée (7), et une seconde position d'extrémité de fonctionnement, dans laquelle la seconde unité d'extraction mobile (11) est déplacée vers la première unité d'extraction fixe (8) de manière à déplacer la capsule (1) d'une position d'entrée à une position d'insertion dans le logement (9) de la première unité fixe (8) pour extraire le mélange liquide en alimentant un fluide chaud sous pression à l'intérieur de la capsule (1) ;
**caractérisée en ce que** les moyens (10) de perforation et de passage du mélange comprennent un poinçon de perforation (12), positionné de manière fixe au niveau d'un fond (9a) du logement (9), et faisant partiellement saillie à partir du fond (9a) ; le poinçon (12) comprenant :
- une première portion apicale (12a) configurée, pendant l'utilisation, pour intercepter et perforer la première paroi (3) de la capsule (1) lors d'une déformation de la première paroi (3) de la capsule (1), sous l'effet du fluide sous pression, vers le fond (9a) du logement (9) ;
- une seconde portion de base (12b) ayant une section transversale en forme de pont définissant une ouverture (13) passant vers un canal (14) ou une chambre, positionnée sous le poinçon (12), configurée pour la chute contrôlée du mélange liquide sortant de l'ouverture de la première paroi (3) de la capsule (1) tandis que le poinçon (12) est maintenu, c'est-à-dire inséré, à l'intérieur de la capsule (1),
étant **caractérisée en ce que** le canal (14) a deux portions semi-circulaires définies par le poinçon (12) sus-jacent et configurées pour contenir deux lèvres (3a, 3b) de la première paroi fermée (3) de la capsule (1), définies par l'incision du poinçon (12), générées lors de la déformation de la première paroi fermée (3) sous l'effet du fluide sous pression, et de manière à définir un seul point de sortie contrôlé du mélange liquide.

2. Machine selon la revendication 1, dans laquelle le fond (9a) du logement (9) de la première unité d'extraction fixe (8) a un profil qui est partiellement arrondi et configuré pour permettre un couplage complémentaire de la première paroi (3) de la capsule (1) perforée par le poinçon (12) lors de sa déformation sous l'effet de la pression du fluide entrant.

3. Machine selon l'une quelconque des revendications précédentes, dans laquelle le poinçon (12) a une première portion apicale (12a) ayant une section transversale triangulaire avec un sommet libre orienté à l'opposé du fond (9a) du logement (9) de la première unité d'extraction fixe (8).

4. Machine selon l'une quelconque des revendications précédentes, dans laquelle le poinçon (12) a une forme triangulaire avec des côtés extérieurs arrondis ; la seconde portion de base (12b) du poinçon (12) ayant une section transversale plus petite que la section transversale de la première portion apicale (12a), et comprend deux bras d'extrémité (15, 16) se fixant à la première unité d'extraction fixe (8) à l'intérieur de laquelle est définie l'ouverture (13) pour le passage du mélange liquide.

5. Machine selon l'une quelconque des revendications précédentes, dans laquelle le poinçon (12) est associé à et fait saillie à partir d'une base de support (17) insérée dans la première unité d'extraction fixe (8) ; sur la base de support (17) se trouve le canal (14) ou la chambre reliée à un conduit (18) pour le passage du mélange liquide vers une tête de distribution (19).

6. Machine selon la revendication 5, dans laquelle la base de support (17) a le canal ouvert (14) avec une section transversale circulaire au-dessus de laquelle le poinçon (12) est positionné le long d'une directrice diamétrale passant à travers le centre de la section transversale circulaire du canal (14) et ne couvrant qu'une partie du canal (14).

7. Machine selon l'une quelconque des revendications précédentes, dans laquelle le poinçon (12) est partiellement logé dans une cavité cylindrique (9b) réalisée dans le fond (9a) du logement définissant la partie supérieure du canal (14) ou de la chambre.

8. Procédé de préparation et d'extraction de boisson chaude à partir d'une capsule (1) comprenant un corps de capsule (2) formant une chambre délimitée par une première paroi fermée (3) et une seconde paroi ouverte (4) sur laquelle est positionnée, pour la fermeture, une feuille de scellement de la chambre ; une dose de produit étant logée à l'intérieur de ladite chambre ;
un procédé comprenant les étapes de :
- insérer la capsule (1) dans une ouverture d'entrée (7) d'une machine (100) de préparation et d'extraction de la boisson chaude à partir de la capsule (1) et au niveau d'une seconde unité d'extraction mobile (11) positionnée dans une première position d'extrémité de non-fonctionnement ;
- déplacer la seconde unité mobile (11) avec la capsule (1), le long d'une trajectoire linéaire (T), vers une première unité d'extraction fixe (8) ayant un logement correspondant (9) pour la capsule (1) et des moyens (10) de perforation et de passage du mélange, pour obtenir l'extraction de la boisson ;
- verrouiller la capsule (1) à l'intérieur du logement (9) sans contact entre la première paroi fermée (3) de la capsule (1) et les moyens de perforation (10) ;
- introduire un fluide chaud sous pression à travers la seconde paroi (4) en perforant sa feuille de scellement ;
- déformer la première paroi (3) de la capsule (1) sous l'effet de la pression du fluide chaud vers un fond (9a) du logement (9) ;
- perforer la première paroi déformée (3) à travers une première portion apicale (12a) d'un poinçon de perforation (12), positionné de manière fixe au fond (9a) du logement (9) ;
- sortie du mélange liquide au niveau de la sortie d'une ouverture de la première paroi (3) de la capsule (1) perforée tandis que la portion apicale (12a) du poinçon (12) est insérée à l'intérieur de la capsule (1) ;
- chute contrôlée du mélange liquide à travers une seconde portion de base (12b) du poinçon (12) ayant une section en pont définissant une ouverture (13) passant vers un canal (14) ou une chambre, positionnée sous le poinçon (12) pour obtenir la distribution de la boisson chaude,
le procédé étant **caractérisé en ce qu'**à la fin de l'étape de distribuer la boisson chaude, c'est-à-dire à la fin de l'introduction de fluide chaud sous pression dans la capsule (1), seule la portion apicale (12a) du poinçon (12) reste insérée à l'intérieur de la capsule (1) jusqu'à l'extraction de la capsule (1), bloquant l'échappement du liquide restant à l'intérieur de la capsule (1).
